# EUROPEAN PATENT APPLICATION

(11) **EP 2 123 555 A2**
(43) Date of publication of application: **25.11.2009**
(21) Application number: 09006243.1
(22) Date of filing: 07.05.2009
(51) Int. Cl.: B64C 27/00, B64C 27/04, B64C 27/57, B64C 27/59, B64C 27/82

(54) **Directional control arrangement to provide stabilizing feedback to a structural bending mode**

(30) Priority: 19.05.2008 US 123420
(71) Applicant: Sikorsky Aircraft Corporation, Stratford, CT 06615 (US)
(72) Inventor: Frederickson, Kirk, C., Seymour CT 06615 (US)
(74) Representative: Klunker . Schmitt-Nilson . Hirsch

(57) **Abstract**

A control system and method of producing a stabilizing feedback includes generating a control output with a link in response to a deflection of a structure, the control output operable to at least partially resist the deflection.

## Description

### BACKGROUND

The present invention relates to a control system, and more particularly to a control system for a rotary-wing aircraft which reduces vibration.

Many rotary-wing aircraft utilize a single main rotor assembly and a tail rotor assembly. The tail rotor assembly provides yaw thrust to counteract induced torque generated by the main rotor assembly and provide yaw directional control.

Aircraft structures typically have several bending modes with frequencies which may be within the bandwidth of the control system. If an excitation such as turbulence excites the bending mode, airframe vibration and deflection results. In some instances, airframe deflections induce control system inputs that affect this mode and cause destabilizing feedback which may increase the magnitude of the vibration.

In a rotary-wing aircraft, development effort has been expended to reduce vibration that may excite bending mode response within the extending tail. Although effective, systems such as aerodynamic fairings, beanies, extended decks and strakes may increase aircraft weight.

### SUMMARY

A control system according to an exemplary aspect of the present invention includes: a control; and a link connected to the control, the link oriented to generate a control output in the control in response to a deflection, the control output operable to at least partially resist the deflection.

A rotary wing aircraft according to an exemplary aspect of the present invention includes: an airframe comprising an extending tail; a tail rotor system mounted to the extending tail; an input; and a link which connects the input to the tail rotor system, the link oriented to generate a pitch output in the tail rotor system in response to a deflection of the extending tail, the pitch output operable to at least partially resist the deflection.

A method of producing a stabilizing feedback according to an exemplary aspect of the present invention includes: orienting a link within a structure; and generating a control output with the link in response to a deflection of the structure, the control output operable to at least partially resist the deflection.

### BRIEF DESCRIPTION OF THE DRAWINGS

The various features and advantages of this invention will become apparent to those skilled in the art from the following detailed description of the disclosed non-limiting embodiment. The drawings that accompany the detailed description can be briefly described as follows:
Figure 1 is a general perspective view of an exemplary rotary wing aircraft embodiment for use with the present invention;
Figure 2A is a general partial phantom view of a flight control system in an exemplary rotary wing aircraft embodiment;
Figure 2B is a general perspective view of a tail-rotor flight control system;
Figure 2C is a pedal system input of the tail-rotor flight control system;
Figure 2D is a tail rotor system output of the tail-rotor flight control system;
Figure 3A is a schematic view of a tail-rotor flight control system;
Figure 3B is a schematic view of the flexible cables in the tail-rotor flight control system of Figure 3A oriented to generate a pitch output in a tail rotor system in response to a deflection of an extended tail of an aircraft fuselage; and
Figure 4 is a vibratory response plot of a fuselage bending mode to wake turbulence effect of structural feedback into a tail rotor system.

### DETAILED DESCRIPTION OF THE Exemplary Embodiments

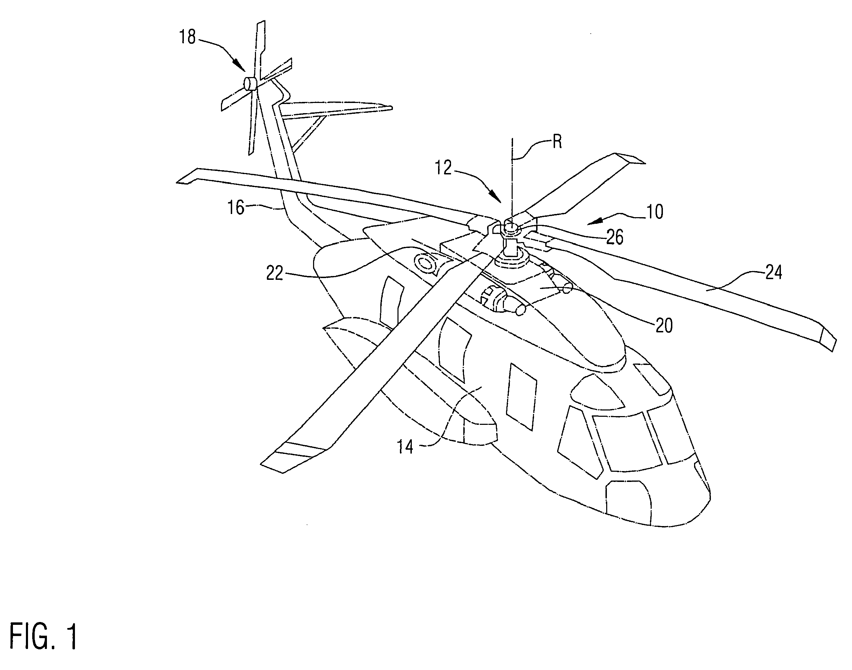

Figure 1 schematically illustrates a rotary-wing aircraft 10 having a main rotor system 12. The aircraft 10 includes an airframe 14 having an extending tail 16 which mounts a tail rotor system 18. The main rotor system 12 is driven about an axis of rotation R through a main rotor gearbox (MGB) 20 by a multi-engine powerplant system 22. The multi-engine powerplant system 22 is integrated with the MGB 20 to drive the main rotor system 12 and the tail rotor system 18. The multi-engine powerplant system 22 generates the power available for flight operations and couples such power to the main rotor system 12 through the MGB. The main rotor system 12 includes a multiple of rotor blades 24 mounted to a rotor hub 26. Although a particular helicopter configuration is illustrated and described in the disclosed embodiment, other configurations and/or machines, such as high speed compound rotary-wing aircraft with supplemental translational thrust systems, dual contrarotating, coaxial rotor system aircraft, turbo-props, tilt-rotors and tilt-wing aircraft, will also benefit from the present invention.

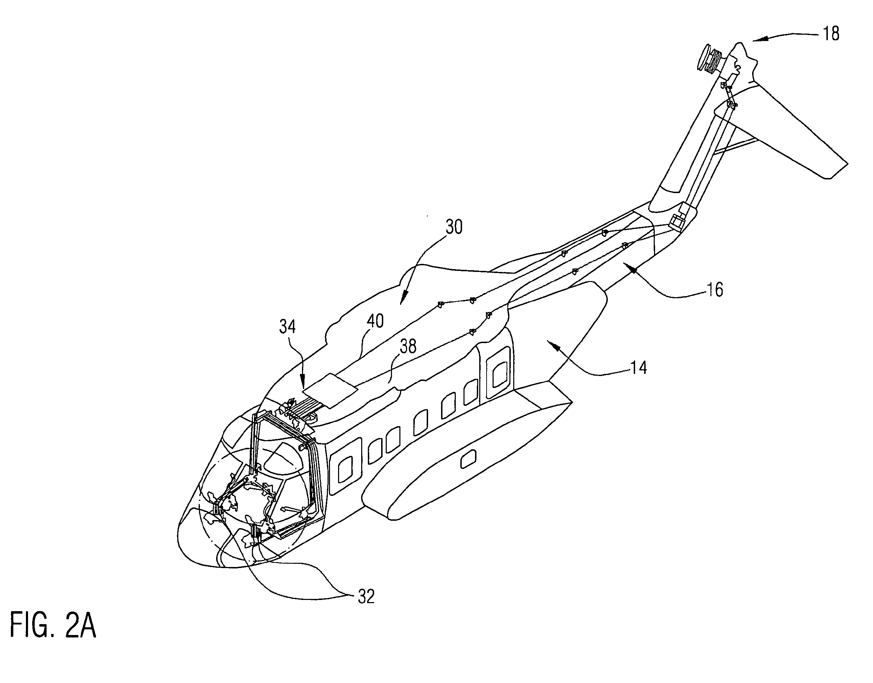

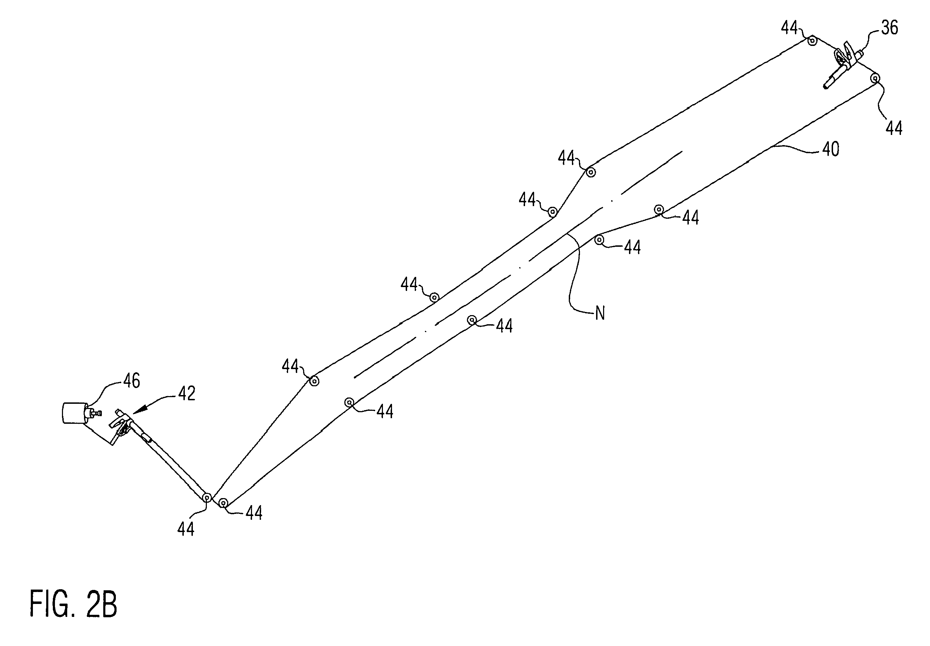

Referring to Figure 2A, the tail rotor system 18 is controlled by a flight control system 30. The flight control system 30 (Figure 2B) disclosed herein operates a control such as the tail rotor system 18 to provide a control output such as a pitch control output. It should be understood that the flight control system 30 could be utilized to selectively generate a control output for any aircraft systems or control surfaces. Furthermore, other controls which are used on fixed wing aircraft, vehicles, ships and elsewhere outside the aircraft field may also benefit herefrom.

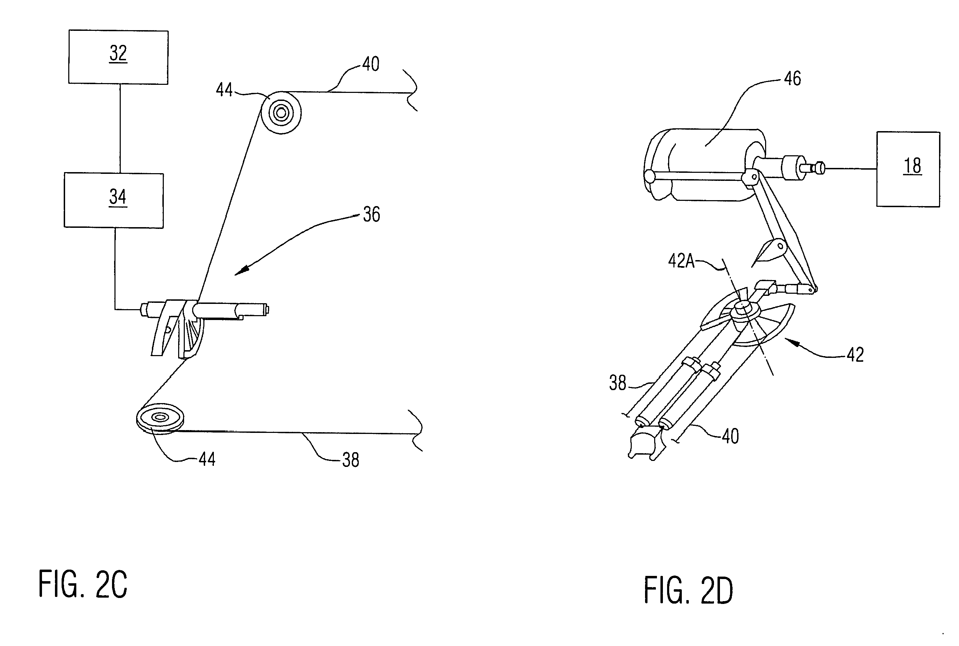

Referring to Figure 2B, the flight control system 30 includes an input such as a pilot actuated pedal system 32 which imparts pilot control motion to a mixing unit 34. It should be understood that although the pedal system 32 is illustrated in the disclosed embodiment, other inputs such as flight or drive controls may alternatively or additionally be provided. The mixing unit 34 typically includes a system of rods and bell cranks which coordinate or "mix" the pedal, cyclic and collective control inputs then communicates the "mixed" input to other controls and servos. The pedal system 32 positions a forward control quadrant 36 (Figure 2C) either directly or through the mixing unit 34. The forward control quadrant 36 is mounted for rotational motion about an axis of rotation 36A (Figure 2C).

A set of links such as a set of flexible cables 38, 40 are connected to the forward control quadrant 36 at one end and connected at opposite ends to an aft control quadrant 42 (Figure 2D). As utilized herein, "flexible" cables are cables which are capable of flexing but not stretching. It should be understood that although flexible cables are illustrated in the disclosed embodiment, other links such as rods may alternatively or additionally be provided. The aft control quadrant 42 is mounted for rotational motion about axis of rotation 42A (Figure 2D).

The aft control quadrant 42 follows the pilot imparted motions of the forward control quadrant 36 due to the selective tension loading of flexible cables 38, 40 affected by the pilot in operation of the pedal system 32. The aft control quadrant 42 drives a tail rotor servo 46 which controls the pitch output of the tail rotor system 18.

The path of the flexible cables 38, 40 is established by a multiple of roller systems 44 through which the cables 38, 40 are received so that the aft control quadrant 42 follows the pilot imparted motions of the forward control quadrant 36. The flexible cables 38, 40 are guided in their path between control quadrants 36, 42 so as to be free of obstructions and to proceed in a generally parallel relationship through the extended tail 16. The flexible cables 38, 40 are arranged in a separated relationship through the extended tail 16 to provide ballistic tolerance through separation. The separation locates the flexible cables 38, 40 off of a neutral axis N of the extended tail 16. A neutral axis is an axis upon which a structure such as the aircraft tail 16 (Figure 2A) may deflect such that links such as the flexible cables 38, 40 located along the neutral axis would essentially not be affected by the deflection of the structure. Since the flexible cables 38, 40 are located off the neutral axis N, the flexible cables 38, 40 receive an input when the extended tail 16 deflects.

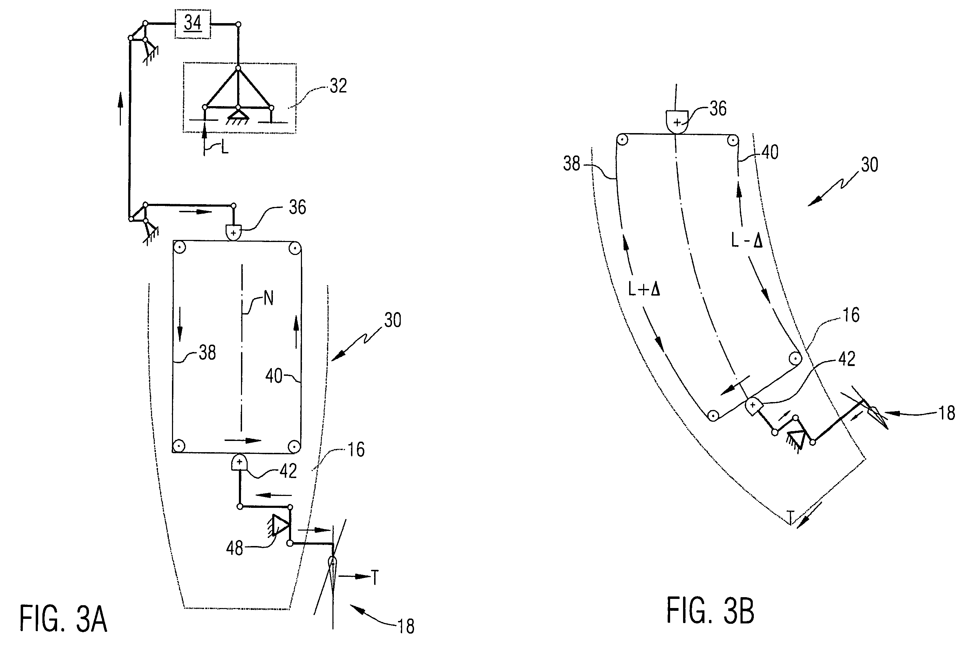

Referring to Figure 3A, the flight control system 30 is schematically illustrated. The pedal system 32 imparts pilot control motion through the mixing unit 34 then to the forward control quadrant 36 from the forward control quadrant 36 the pilot control motion is transferred to the aft control quadrant 42 though the flexible cables 38, 40. The flexible cables 38, 40 are oriented to generate a pitch output and resulting thrust T in the tail rotor system 18 in response to a deflection of the extended tail 16 (Figure 3B) that at least partially resists the deflection of the extended tail 16. That is, the deflection of the extended tail 16 results in a deflection (Δ) which results in a relative change in length (L±Δ) of the flexible cables 38, 40. The relative change in length produces an input to the tail rotor system 18 in opposition to the deflection to thereby produce a stabilizing feedback.

Numerous orientations of the flexible cables 38, 40 and/or other linkages may be utilized to generate the stabilizing feedback. Additional linkages such as reversing systems 48 may be required to assure proper control output operation relative to control input. That is, reversing systems 48 may be required to assure that, for example, pilot port pedal (L) into the pedal system 32 resorts in a port output from the tail rotor system 18 and deflection of the extended tail 16 to the starboard results in a port output from the tail rotor system 18 to counter the deflection. It should be understood that the reversing systems 48 may be separate systems or alternatively incorporated into the pedal system 32, mixing unit 34, forward control quadrant 36, aft control quadrant 42, tail rotor servo 46 combinations thereof or other components of the flight control system 30 to achieve both stabilizing feedback and proper control response.

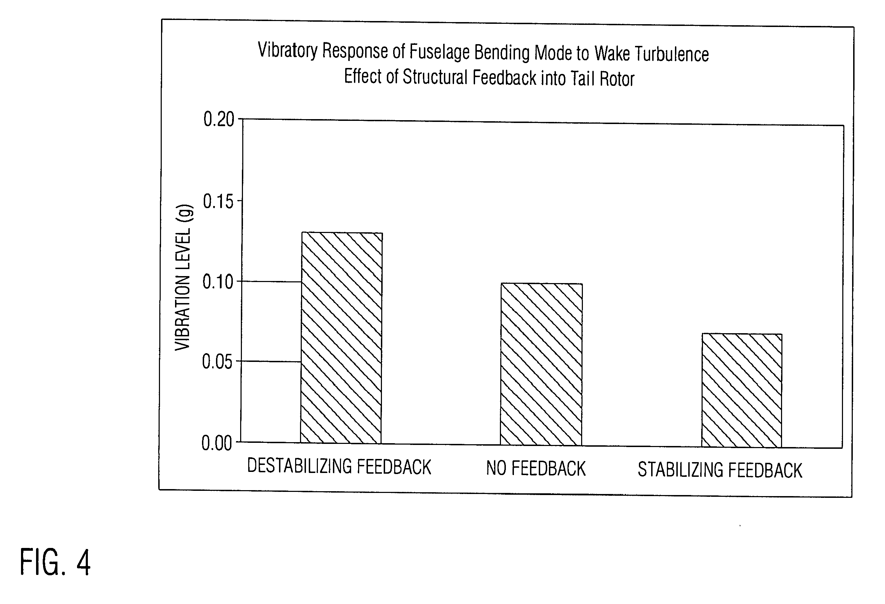

Referring to Figure 4, the stabilizing feedback is in contrast to a destabilizing feedback in which the linkages may be oriented in a manner which generates an output that magnifies the deflection of the extending tail. That is, airframe deflections caused by vibration may result in inputs to the tail rotor control cables which magnify tail shake response when the first lateral bending mode is excited.

The stabilizing feedback operates to reduce aircraft vibration from even a no feedback condition in which airframe deflections provide no inputs to the tail rotor control cables. Stabilizing feedback thereby improves aircrew and passenger ride quality from a no feedback condition in combination with weight reduction through removal or reduction of aerodynamic fairings, beanies, extended decks and strakes.

It should be understood that relative positional terms such as "forward," "aft," "upper," "lower," "above," "below," and the like are with reference to the normal operational attitude of the vehicle and should not be considered otherwise limiting.

It should be understood that although a particular component arrangement is disclosed in the illustrated embodiment, other arrangements will benefit from the instant invention.

Although particular step sequences are shown, described, and claimed, it should be understood that steps may be performed in any order, separated or combined unless otherwise indicated and will still benefit from the present invention.

The foregoing description is exemplary rather than defined by the limitations within. Many modifications and variations are possible in light of the above teachings. Non-limiting embodiments are disclosed herein, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A control system comprising:
a control; and
a link connected to said control, said link oriented to generate a control output in said control in response to a deflection, said control output operable to at least partially resist said deflection.

2. The system as recited in claim 1, wherein said control is a tail rotor.

3. The system as recited in claim 2, wherein said link comprises a flexible cable.

4. A rotary wing aircraft comprising:
an airframe comprising an extended tail;
an tail rotor system mounted to said extended tail;
an input; and
a link which connects said input to said tail rotor system, said link oriented to generate a pitch output in said tail rotor system in response to a deflection of said extended tail, said pitch output operable to at least partially resist said deflection.

5. The aircraft as recited in claim 4, wherein said link comprises a flexible cable.

6. The aircraft as recited in claim 4 or 5, wherein said input comprises a pedal system

7. The aircraft as recited in claim 6, wherein said link is connected to said pedal system through a mixing unit.

8. The aircraft as recited in any of claims 4 to 7, wherein said mixing unit positions a forward control quadrant connected to a first end section of said flexible cable, said forward control quadrant being mounted for rotational motion about an axis of rotation.

9. The aircraft as recited in claim 8, further comprising an aft control quadrant connected to a second end section of said flexible cable, said aft control quadrant being mounted for rotational motion about an axis of rotation, said aft control quadrant rotating in response to said forward control quadrant.

10. The aircraft as recited in claim 9, further comprising a servo which operates said tail rotor system, said aft control quadrant being operable to command said servo.

11. A method of producing a stabilizing feedback comprising:
orienting a link within a structure; and
generating a control output with the link in response to a deflection of the structure, the control output being operable to at least partially resist the deflection.

12. A method as recited in claim 11, wherein orienting the link comprises: orienting the link off of a neutral axis of the structure.

13. A method as recited in claim 11 or 12, wherein orienting the link comprises: orienting a flexible cable within an extended tail of a rotary wing aircraft.

14. A method as recited in any of claims 11 to 13, wherein generating the control output comprises:
generating a yaw force opposite the deflection of the structure.

15. A method as recited in any of claims 11 to 14, wherein generating the control output comprises:
transmitting a pitch command to a tail rotor through the link.
